# EUROPEAN PATENT APPLICATION

(11) **EP 4 794 097 A1**
(43) Date of publication of application: **19.08.2026**
(21) Application number: 25218145.8
(22) Date of filing: 24.11.2025
(51) Int. Cl.: H01M 50/358, H01M 50/383

(54) **BATTERY MODULE**

(30) Priority: 18.02.2025 KR 20250020879
(71) Applicant: SAMSUNG SDI CO., LTD., Yongin-si, Gyeonggi-do 17084 (KR)
(72) Inventor: LEE, EUNSONG, 17084 YONGIN-SI (KR); PARK, JONGTAEK, 17084 YONGIN-SI (KR); KIM, JIN, 17084 YONGIN-SI (KR)
(74) Representative: Regimbeau

(57) **Abstract**

Provided is a battery module. The battery module includes a plurality of battery cells, a housing accommodating the plurality of battery cells, and a vent part arranged in a portion of the housing, wherein the vent part includes an outer hopper arranged through the housing, an inner surface of the outer hopper defines a vent hole penetrating the housing, and a diameter of the vent hole increases toward outside of the battery module.

## Description

### FIELD

One or more embodiments relate to a battery module.

### BACKGROUND

A secondary battery is designed to be charged and discharged, unlike a primary battery which is not designed to be charged. Low-capacity secondary batteries are used in portable small-sized electronic devices, such as smartphones, feature phones, laptop computers, digital cameras, and camcorders, while high-capacity secondary batteries are widely used as energy sources for driving motors in hybrid vehicles, electric vehicles, and the like, and a battery for power storage. Such a secondary battery includes an electrode assembly having a positive electrode and a negative electrode, a case housing the electrode assembly, electrode terminals connected to the electrode assembly, and the like.

The herein-described information disclosed in the background technology of this disclosure is only intended to improve understanding of the background of the disclosure and therefore may include information that does not constitute the prior art.

### SUMMARY

Embodiments relate to a battery module having fire extinguishing capabilities.

However, the technical problems to be solved by the disclosure are not limited to the problems described herein, and other problems not mentioned may be clearly understood by those skilled in the art from the following description of the disclosure.

According to embodiments, a battery module includes a plurality of battery cells, a housing accommodating the plurality of battery cells, and a vent part arranged in a portion of the housing, wherein the vent part includes an outer hopper arranged through the housing, an inner surface of the outer hopper defines a vent hole penetrating the housing, and a diameter of the vent hole increases toward outside of the battery module.

In embodiments, the vent part may further include an inner hopper located in a center of the outer hopper and a connecting portion connecting the inner hopper and the outer hopper to one another.

In embodiments, a distance between the outer hopper and the inner hopper may increase toward outside of the battery module.

In embodiments, a thickness of the inner hopper, measured in a direction from inside to outside of the housing, may be smaller than a thickness of the outer hopper.

In embodiments, the inner hopper may include an opening formed through the inner hopper in a thickness direction of the inner hopper.

In embodiments, a diameter of the opening may increase toward the outside of the battery module.

In embodiments, the vent part may include a mesh portion arranged in a direction substantially perpendicular to an extension direction of the vent hole to block the vent hole.

In embodiments, the mesh portion may have a mesh size in a range of 1 mm to 10 mm.

In embodiments, the vent part may further include an inner hopper located in a center of the outer hopper, and the inner hopper may be spaced apart from the mesh portion and may be positioned closer to the outside of the battery module than the mesh portion.

In embodiments, the outer hopper may further include a cooling portion surrounding the vent hole.

According to one or more embodiments, a battery module includes a plurality of battery cells, a housing accommodating the plurality of battery cells, and a vent part arranged in a portion of the housing, wherein the vent part includes an outer hopper having an inner surface defining a vent hole penetrating the housing, an inner hopper located in a center of the outer hopper, and a connecting portion connecting the inner hopper and the outer hopper to one another, and a gap between the outer hopper and the inner hopper increases toward outside of the battery module.

In embodiments, a diameter of the vent hole may increase toward the outside of the battery module.

In embodiments, a thickness of the inner hopper, measured in a direction from inside to outside of the housing, may be smaller than a thickness of the outer hopper.

In embodiments, the inner hopper may include an opening formed through the inner hopper in a thickness direction of the inner hopper.

In embodiments, a diameter of the opening may increase toward the outside of the battery module.

In embodiments, the vent part may include a mesh portion arranged in a direction substantially perpendicular to an extension direction of the vent hole to block the vent hole.

In embodiments, the mesh portion may have a mesh size in a range of 1 mm to 10 mm.

In embodiments, the inner hopper may be spaced apart from the mesh portion and may be positioned closer to the outside of the battery module than the mesh portion.

In embodiments, the outer hopper may further include a cooling portion surrounding the vent hole.

In embodiments, a slope of a straight line connecting opposite ends of the outer hopper in a thickness direction of the housing may be in a range of 30° to 60°.

In embodiments, a method of manufacturing a battery module includes a providing plurality of battery cells, providing a housing accommodating the plurality of battery cells, and providing a vent part arranged in a portion of the housing, wherein the vent part includes an outer hopper arranged through the housing, an inner surface of the outer hopper defines a vent hole penetrating the housing, and a diameter of the vent hole increases toward outside of the battery module.

### BRIEF DESCRIPTION OF THE DRAWINGS

The following drawings attached to this specification illustrate preferred embodiments of the disclosure and, together with the detailed description of the disclosure described herein, serve to further understand the technical idea of the disclosure; therefore, the disclosure should not be interpreted as being limited to matters described in such drawings:
FIG. 1 is a schematic perspective view of a battery module according to embodiments;
FIG. 2 is a schematic perspective view of embodiments of a battery cell of the battery module of FIG. 1;
FIG. 3 is a cross-sectional view taken along line I-I' of FIG. 2;
FIG. 4 is a schematic plan view of embodiments of a vent part of FIG. 1;
FIG. 5 is a cross-sectional view taken along line II-II' of FIG. 4;
FIG. 6 is a schematic plan view of another embodiment of a vent part of FIG. 1;
FIG. 7 is a cross-sectional view taken along line III-III' of FIG. 6;
FIG. 8 is a schematic plan view of another embodiment of a vent part of FIG. 1;
FIG. 9 is a cross-sectional view taken along line IV-IV' of FIG. 8;
FIG. 10 is a schematic plan view of another embodiment of a vent part of FIG. 1;
FIG. 11 is a cross-sectional view taken along line V-V' of FIG. 10;
FIG. 12 is a schematic plan view of another embodiment of a vent part of FIG. 1; and
FIG. 13 is a cross-sectional view taken along line VI-VI' of FIG. 12.

### DETAILED DESCRIPTION

Hereinafter, preferred embodiments of the disclosure will be described in detail with reference to the attached drawings. Prior to this, terms or words used in this specification and claims should not be interpreted as limited to their usual or dictionary meanings, and should be interpreted as meanings and concepts that conform to the technical idea of the disclosure based on the principle that the inventor may appropriately define the concept of the term to explain his or her own disclosure in the best way. Therefore, the embodiments described in this specification and the configurations illustrated in the drawings are only some of the most preferred embodiments of the disclosure and do not represent all of the technical ideas of the disclosure, and it should be understood that there may be various equivalents and modified examples that may replace those embodiments at the time of filing this application.

The terms "comprise or include" and/or "comprising or including" as used herein specify the presence of stated features, numbers, steps, operations, members, elements, and/or groups thereof, but do not preclude the presence or addition of one or more other features, numbers, operations, members, elements, and/or groups thereof. Upon describing embodiments of the disclosure, the terms "may" and "may be" may include " embodiments of the disclosure."

To help understanding of the disclosure, the accompanying drawings are not drawn to scale, but the dimensions of some components may be exaggerated. Furthermore, the same element in different embodiments may be given the same reference number.

When it is explained that two objects are 'identical,' this means that these objects are 'substantially identical.' Therefore, the substantial equality may include a case in which a deviation considered as being at a low level in the art is present, for example, a deviation within 5% is present. Uniformity of a parameter over a given region may imply uniformity from an average perspective.

Although the terms first, second, and the like may be used herein to describe various components, these components are not limited by these terms. These terms are used only to distinguish one component from another, and unless otherwise stated, it is of course the case that a first component may also be a second component.

Throughout the specification, unless otherwise stated, each component may be singular or plural.

Any configuration being placed "above (or below)" a component or "on (or under)" a component may mean not only that any configuration is placed in contact with the upper surface (or lower surface) of a component, but also that other configurations may be interposed between the component and any configuration placed on (or below) the component.

Further, when one component is described as being "connected," "coupled," or "fastened" to another component, the components may be directly connected or able to be connected to one another; however, it is also to be understood that an additional component may be "interposed" between the two components, or the two components may be "connected," "coupled," or "fastened" through the additional component. In case that it is said that a part is electrically coupled to another part, this includes not only cases where they are directly connected, but also cases where they are connected with another element in between.

Whenever reference is made throughout the specification to "A and/or B," this means A, B, or A and B, unless otherwise specified. That is, "and/or" includes all or any combination of a plurality of listed items. "C through D" refers to at least C and D or less, unless otherwise specified.

The terminology used herein is to describe the embodiments of the disclosure and is not intended to limit the disclosure.

Hereinafter, embodiments will be described in detail with reference to the accompanying drawings. In case of describing embodiments with reference to the accompanying drawings, the same or corresponding elements are denoted by the same reference numerals.

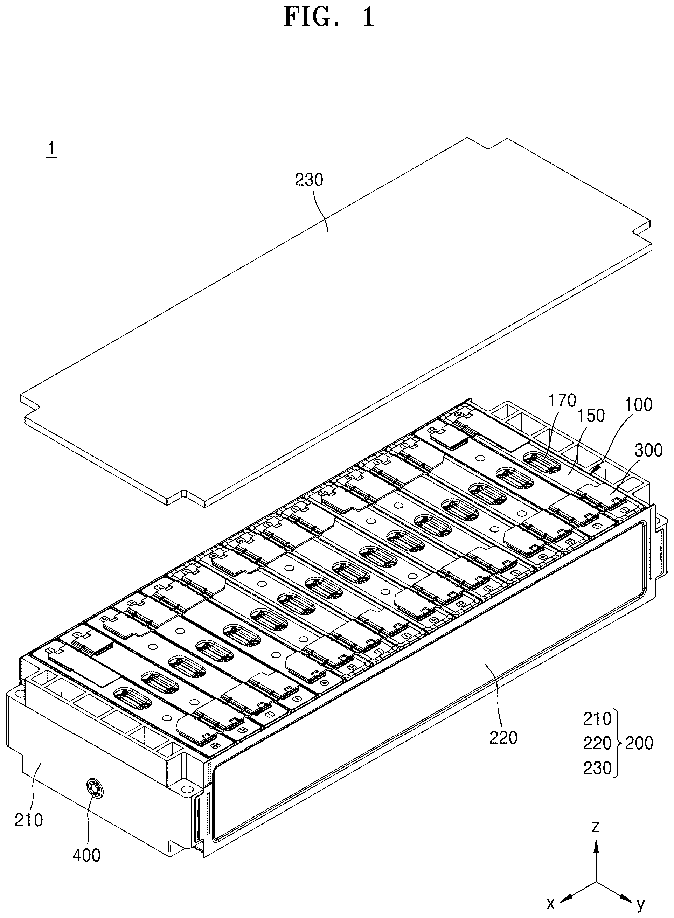

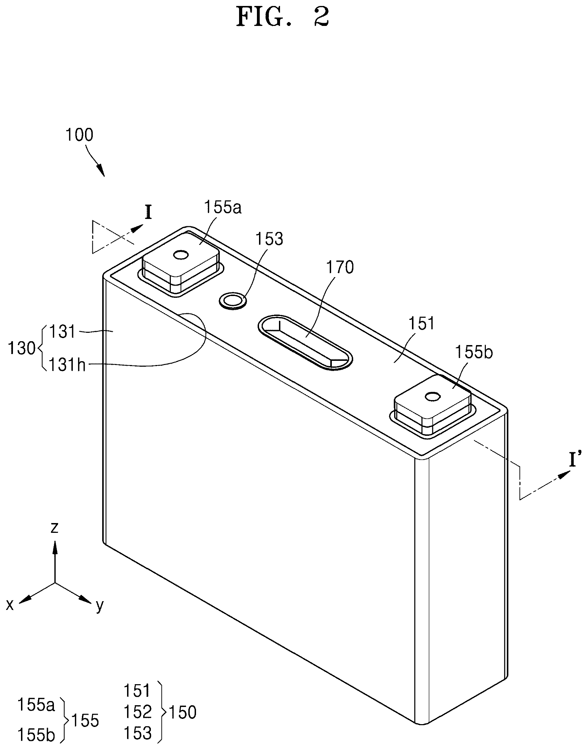

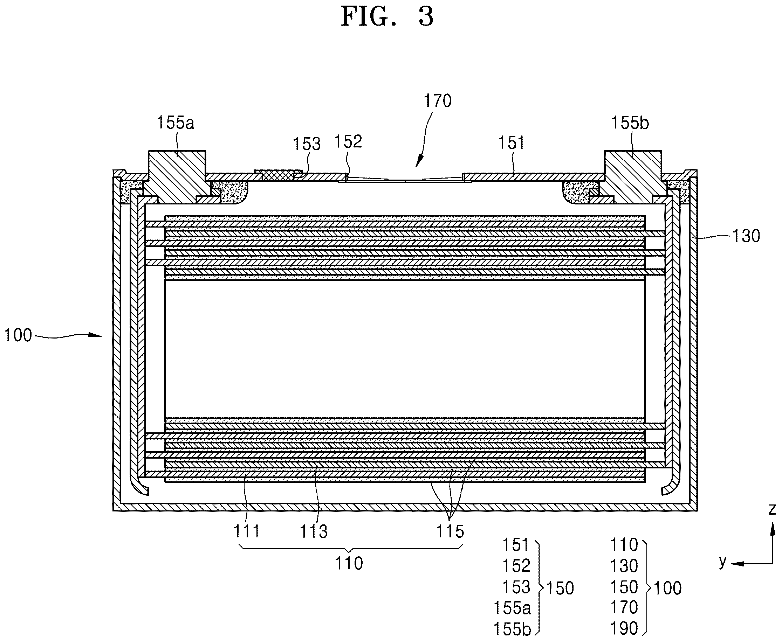

FIG. 1 is a schematic perspective view of a battery module according to embodiments, FIG. 2 is a schematic perspective view of embodiments of a battery cell of the battery module of FIG. 1, and FIG. 3 is a cross-sectional view taken along line I-I' of FIG. 2.

Referring to FIGS. 1 to 3, a battery module 1 may include a plurality of battery cells 100, a housing 200 accommodating the plurality of battery cells 100, connection tabs 300 electrically connecting the plurality of battery cells 100, and a vent part 400 arranged on a portion of the housing 200.

The plurality of battery cells 100 may be connected in series or in parallel to increase voltage and capacity. The plurality of battery cells 100 may be arranged along a preset direction. The plurality of battery cells 100 arranged may be fixed by the housing 200.

The housing 200 may accommodate the plurality of battery cells 100, and the plurality of battery cells 100 may be arranged in one direction (an x-axis direction based on FIG. 1) so that wide surfaces of adjacent battery cells 100 oppose one another inside the housing 200.

The housing 200 may include a pair of end plates 210 which oppose the wide surfaces of the battery cells 100, side plates 220 connecting the pair of end plates 210, a bottom plate (not shown), and a top plate 230. The side plates 220 may support side surfaces of the battery cells 100, the bottom plate (not shown) may support bottom surfaces of the battery cells 100, and the top plate 230 may support top surfaces of the battery cells 100. The pair of end plates 210, the side plates 220, the bottom plate (not shown), and the top plate 230 may be connected by members, such as bolts.

The connection tabs 300 may electrically connect the plurality of battery cells 100, and may connect, for example, neighboring battery cells 100 of the plurality of battery cells 100 in series or in parallel. In some embodiments, the connection tab 300 may be coupled to an electrode terminal 155 to be described later to electrically connect the neighboring battery cells 100. The connection tab 300 may be a bus bar.

The herein description has been given as an example of a serial connection, but the connection structure is not limited to the serial structure, and various connection structures may be adopted as needed. The number and arrangement of battery cells 100 are not limited to the structure shown in FIG. 1 and may vary as needed.

The battery cell 100 may be a battery that may be charged and discharged and may include an electrode assembly 110, a case part 130, a cap plate part 150, and a safety vent 170.

The electrode assembly 110 according to embodiments may include a positive electrode 111 and a negative electrode 113. In some embodiments, the electrode assembly 110 may be wound after a separator 115, which is an insulator, is inserted between the positive electrode 111 and the negative electrode 113.

However, the disclosure is not limited thereto, and the electrode assembly 110 described herein may be formed in a structure in which the positive electrode 111 and the negative electrode 113 each including a plurality of sheets are alternately stacked with the separator 115 placed between the positive electrode 111 and the negative electrode 113.

A description will be given of an example in which the battery cell 100 according to embodiments is a lithium ion battery cell having a square shape. However, the disclosure is not limited thereto, and may be applied to various types of battery cells, such as lithium polymer battery cells or cylindrical battery cells.

The positive electrode 111 and the negative electrode 113 may include coated parts and uncoated parts (reference numerals not shown) in a current collector formed of a thin plate metal foil. The coated parts may be coated with an active material and the uncoated parts may not be coated with the active material.

The case part 130 may accommodate the electrode assembly 110, define an overall appearance of the battery cell 100, and may include a conductive metal, such as aluminum, an aluminum alloy, or a nickel-plated steel. For example, the case part 130 may provide a space in which the electrode assembly 110 is accommodated.

The case part 130 may include a case body 131 formed in a shape that surrounds the inner electrode assembly 110. The case body 131 according to this embodiment is illustrated in a rectangular parallelepiped shape with one side open, but is not limited thereto, and may be variously modified into a cylindrical shape, a prism shape, and the like.

The case body 131 according to embodiments may be formed in a shape having an inner hollow space. The electrode assembly 110 and an electrolyte may be accommodated in the hollow space of the case part 130.

An opening 131h may be formed in one surface of the case body 131. The opening 131h may be formed by opening one surface of the case body 131, and the electrode assembly 110 may be inserted into the case body 131 through the opening 131h.

The cap plate part 150 may be coupled to the case part 130 while covering the opening 131h, and may include a conductive material.

The cap plate part 150 according to embodiments may include a cap plate 151 that is an area covering the opening 131h, and the cap plate 151 may be formed in a thin plate shape and coupled to the opening 131h in a welding manner.

The cap plate 151 may protect one surface of the battery cell 100, suppress physical damage to the battery cell 100, and block substances outside the battery cell 100 from flowing into the case part 130. The electrolyte and the electrode assembly 110 inside the case part 130 may be sealed not to leak out to the outside.

The cap plate 151 may include an installation hole 152 through which the inside and outside of the case part 130 communicate with one another and in which the safety vent 170 is installed, and an injection hole 153 through which the electrolyte is injected.

According to embodiments, the installation hole 152 may be formed through the cap plate 151. The installation hole 152 may be an area where the safety vent 170 to be described later is installed.

The installation hole 152 may allow the inside and outside of the cap plate 151 to communicate with one another. In some embodiments, the installation hole 152 may be a passage through which gas generated inside the case part 130 may be discharged to the outside. The installation hole 152 may also be a passage through which external air, gas, pollutants, and the like are introduced into the case part 130.

The installation hole 152 may be formed in an elliptical shape extending in a longitudinal direction (a y-axis direction based on FIG. 2). However, it is not limited to this, and various modifications, such as a rectangular shape and a circular shape, may be implemented within the technical idea that the installation hole 152 is formed through the cap plate 151 and communicates the inside and outside of the case part 130.

According to embodiments, a length of the installation hole 152 in a width direction (the x-axis direction based on FIG. 2) may be shorter than a length of the cap plate 151 in the width direction (the x-axis direction based on FIG. 2), and a height of the installation hole 152 may be the same as a height of the cap plate 151 in a thickness direction (a z-axis direction based on FIG. 2).

The installation hole 152 may be formed in a central portion of the cap plate 151. For example, the installation hole 152 may be arranged between a plurality of electrode terminals 155a and 155b arranged on opposite end portions of the cap plate 151. However, it is not limited to this, and the installation hole 152 may also be arranged outside the plurality of electrode terminals 155a and 155b, and in another example, may be arranged to be biased toward one side with respect to the central portion of the cap plate 151.

According to an optional embodiment, the installation hole 152 may be arranged as a plurality of installation holes. The plurality of installation holes 152 may be arranged along a longitudinal direction of the cap plate 151 (the y-axis direction based on FIG. 2). Accordingly, the safety vent 170 installed in the installation hole 152 may also be arranged as a plurality of safety vents.

The injection hole 153 that is formed in a shape of a hole may be formed in the cap plate 151 to allow injection of the electrolyte. The injection hole 153 may be a passage through which the electrolyte may be replenished or replaced during maintenance of the battery cell 100.

According to embodiments, an injection stopper (reference numeral not shown) that seals the injection hole 153 may be fitted into the injection hole 153. An outer circumference of an area of the injection stopper, which is fitted into the injection hole 153, may be smaller than an inner circumference of the injection hole 153, so that the electrolyte may be sealed not to leak out to the outside.

The injection stopper according to embodiments may include a material, such as polyethylene, polypropylene, or silicone. Accordingly, the sealing property of the injection hole 153 may be improved, and the stability of the battery cell 100 may be maintained without reacting with the electrolyte inside the case part 130.

The injection hole 153 may be arranged on one side of the installation hole 152 and may be located between the plurality of electrode terminals 155a and 155b. However, it is not limited to this, and the injection hole 153 may be variously modified, for example, may be arranged on the outside of the plurality of electrode terminals 155a and 155b, may be arranged far away from the installation hole 152, and the like.

The electrode terminal 155 may be electrically connected to the positive electrode 111 or the negative electrode 113, and may be installed to protrude outward through the cap plate 151. The electrode terminal 155 may be arranged as a plurality of electrode terminals along the longitudinal direction of the cap plate 151 (the y-axis direction based on FIG. 2), and the plurality of electrode terminals 155 may include a positive electrode terminal 155a and a negative electrode terminal 155b.

For example, outer circumferential surfaces of upper pillars of the positive electrode terminal 155a and the negative electrode terminal 155b, which protrude to the outside of the cap plate 151, may be threaded and fixed on the cap plate 151 by using nuts.

However, it is not limited to this, and the positive electrode terminal 155a and the negative electrode terminal 155b may be variously modified, for example, may be formed in a rivet structure to be riveted to the cap plate 151 or may be welded to the cap plate 151.

The safety vent 170 may be an area that breaks in case that internal pressure of the case part 130 increases or a thermal runaway occurs. In case that the safety vent 170 breaks, internal gas of the case part 130 may pass through the installation hole 152 to be discharged to the outside of the battery cell 100 along a flow path.

Upon an occurrence of an event, such as thermal runaway, in the battery cell 100, flames and various flammable gases may be generated. Heat generated in one battery cell 100 may cause thermal runaway in other adjacent battery cells 100.

High-temperature and high-pressure venting gas may be generated inside the battery module 1, and in case that the venting gas comes into contact with oxygen, a fire may occur. The venting gas may cause a fire to increase in size in case that the venting gas encounters oxygen outside the battery module 1.

The vent part 400 may be arranged in one area of the housing 200. As an example, the vent part 400 may be formed on a portion of the end plate 210, but is not limited thereto, and may be formed on the side plate 220, or the like.

Although not shown, the vent part 400 may be normally covered with a stopper to block the inside and outside of the battery module 1. However, in case that an event, such as a fire, occurs in the battery module 1, the stopper may be open and gas inside the battery module 1 may be discharged out through the vent part 400.

The vent part 400 may discharge venting gas, fragments, flames, and the like inside the battery module 1 to the outside of the battery module 1, thereby suppressing an occurrence of a fire in the battery module 1 and a serial thermal runaway between the battery cells 100.

However, venting gas inside the battery module 1 may be discharged to the outside of the battery module 1 through the vent part 400, but external oxygen may also flow into the battery module 1 through the vent part 400, which may cause a larger fire.

In case that the battery module 1 is arranged in an electric motor, there may be the severity of the problem in that a fire occurred by venting gas or the like encountering oxygen outside the battery module 1 may lead to casualties.

Hereinafter, the vent part 400 that reduces the concentration of venting gas and the like, quickly diffuses the venting gas and the like, and reduces flame generation will be described.

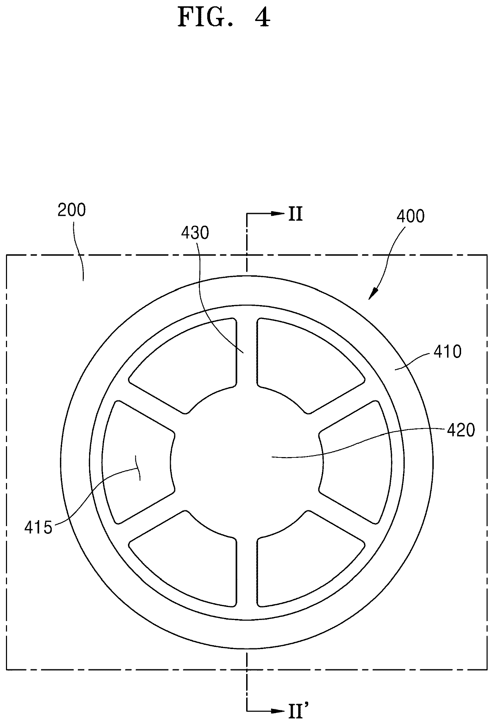

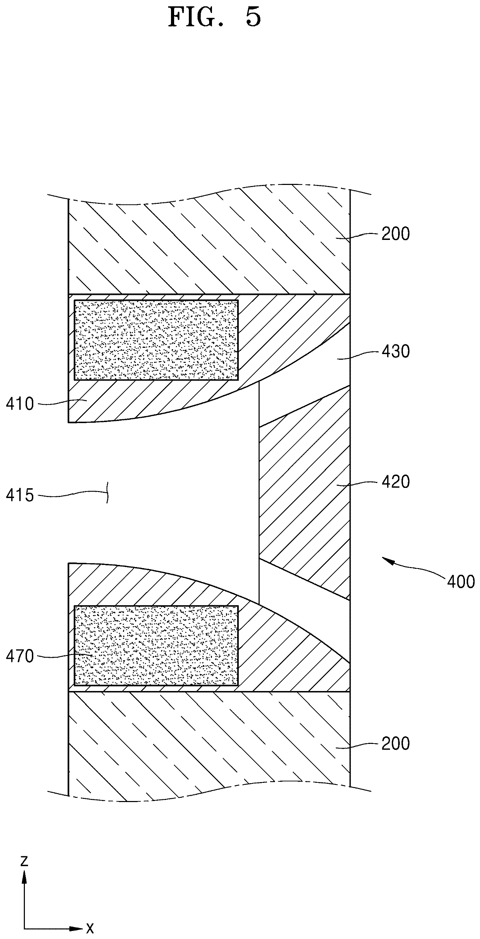

FIG. 4 is a schematic plan view of embodiments of a vent part of FIG. 1, and FIG. 5 is a cross-sectional view taken along line II-II' of FIG. 4.

The vent part 400 may be arranged in one area of the housing 200 of the battery module 1. The vent part 400 may include an outer hopper 410 arranged through the housing 200.

An outer surface of the outer hopper 410 may be in contact with the housing 200 to connect the housing 200 and the vent part 400. An inner surface of the outer hopper 410 may define a vent hole 415 penetrating the housing 200, and a diameter of the vent hole 415 may increase toward the outside of the battery module 1.

In some examples, the vent part 400 may include the vent hole 415 in the x-axis direction, which is a thickness direction of the housing 200, and the vent hole 415 may be defined by a diameter of the inner surface of the outer hopper 410 that increases toward the outside of the battery module 1.

Due to the vent hole 415, which has the diameter increasing toward the outside of the battery module 1, a flow rate at which the venting gas and the like inside the battery module 1 diffuse to the outside of the battery module 1 may increase, thereby reducing the concentration of the flammable venting gas and suppressing oxygen outside the battery module 1 from flowing into the battery module 1.

This may reduce the possibility of flame generation and the size of flame generated due to the reaction of the venting gas and the like with oxygen inside and outside the battery module 1. This may also alleviate and suppress backflow of the venting gas and the like into the battery module 1.

Referring to FIGS. 4 and 5, the vent part 400 according to embodiments may further include an outer hopper 410 penetrating a portion of the housing 200, an inner hopper 420 located in the center of the outer hopper 410, and a connecting portion 430 connecting the inner hopper 420 and the outer hopper 410.

The outer hopper 410 may include the vent hole 415 that is defined by the diameter of the inner surface of the outer hopper 410. The diameter of the inner surface of the outer hopper 410, for example, the diameter of the vent hole 415, may increase toward the outside of the battery module 1. The outer hopper 410 may support the inner hopper 420 and the connecting portion 430.

The vent part 400, for example, the outer hopper 410 may have a thickness corresponding to the thickness of the housing 200. However, it is not limited to this, and the thickness of the vent part 400 may be thinner or thicker than the thickness of the housing 200. The vent part 400 may be arranged to protrude to the outside of the battery module 1 based on an outer surface of the housing 200, or may be arranged to be recessed compared to the outer surface of the housing 200. The vent part 400 may be arranged to protrude to the inside of the battery module 1 based on an inner surface of the housing 200, or may be arranged to be recessed compared to the inner surface of the housing 200.

As an example, the outer hopper 410 may further include a cooling portion 470 surrounding the vent hole 415. Cooling water may be stored inside the cooling portion 470, and may circulate with the vent hole 415 placed at an inner side thereof. Although not shown, the housing 200 may include a portion where cooling water flows to the cooling portion 470 and cooling water which has absorbed heat is discharged from the cooling portion 470. The cooling water inside the cooling portion 470 may absorb heat from fragments, which are discharged to the outside of the battery module 1, thereby reducing the likelihood of the fragments acting as an ignition source.

The inner hopper 420 may be formed in a cylindrical shape whose diameter increases toward the outside of the battery module 1 along the center of the vent hole 415. The inner hopper 420 may be connected to the connecting portion 430 and supported by the outer hopper 410. As an example, a thickness of the inner hopper 420 which is measured in the x-axis direction as a direction from the inside to the outside of the housing 200 may be thinner than a thickness of the outer hopper 410, and the outer surface of the inner hopper 420 may be arranged to correspond to the outer surface of the outer hopper 410.

Venting gas and the like may be discharged to the outside of the battery module 1 by passing through a gap between the inner hopper 420 and the outer hopper 410. The gap between the outer hopper 410 and the inner hopper 420 may increase toward the outside of the battery module 1. For example, a distance between the outer hopper 410 and the inner hopper 420 may increase toward the outside of the battery module 1.

This may increase a flow rate of venting gas and the like toward the outside of the battery module 1 but may suppress oxygen outside the battery module 1 from easily flowing into the battery module 1.

The inner hopper 420 may diffuse venting gas and the like at a certain slope from the center of the vent hole 415, so that the venting gas and the like may be diffused at a faster speed than venting gas and the like which diffuse to the outside of the battery module 1 along the center of the vent hole 415 without the inner hopper 420. Accordingly, oxygen and flames outside the battery module 1 may be more difficult to be introduced into the battery module 1.

The connecting portion 430 may connect the outer hopper 410 and the inner hopper 420. The number of connecting portions 430 may not be limited and may be six as an example. A width of the connecting portion 430 may be wide enough to support at least the inner hopper 420, but may be formed thin enough to obtain an effect of allowing venting gas and the like to be discharged to the outside of the battery module 1.

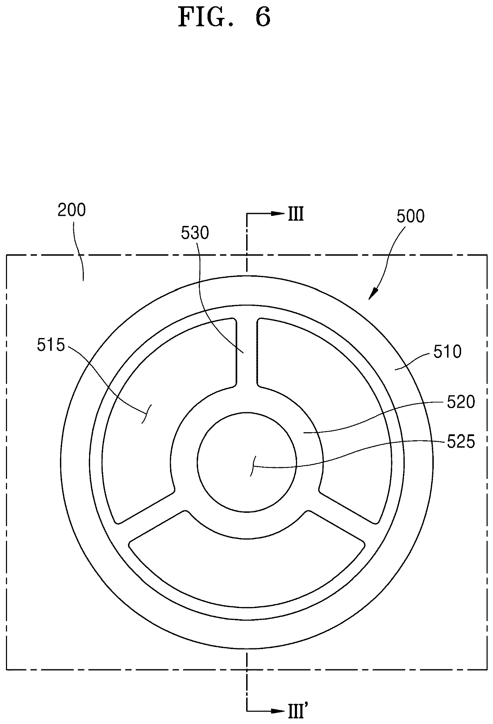

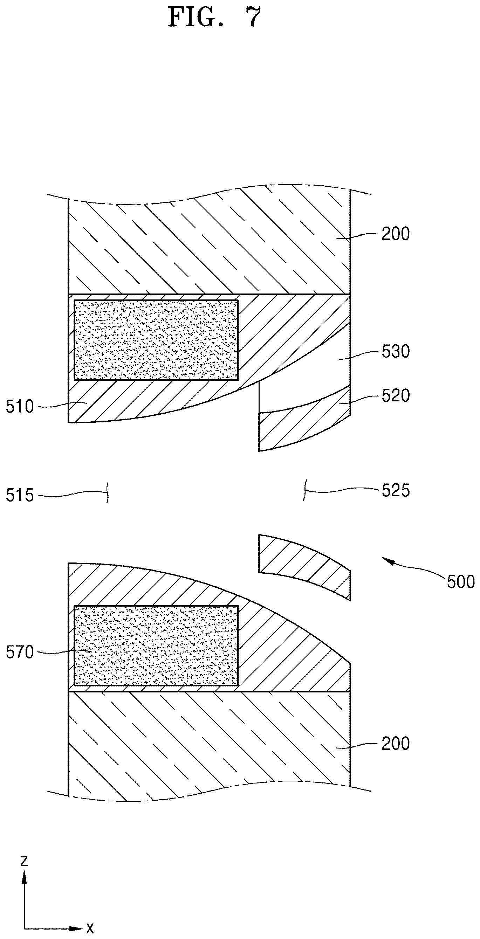

FIG. 6 is a schematic plan view of another embodiment of a vent part of FIG. 1, and FIG. 7 is a cross-sectional view taken along line III-III' of FIG. 6.

A vent part 500 may be arranged in one area of the housing 200 of the battery module 1. The vent part 500 may include an outer hopper 510 having an inner surface, which defines a vent hole 515 penetrating the housing 200. An outer surface of the outer hopper 510 may be in contact with the housing 200 to connect the housing 200 and the vent part 500. A diameter of the vent hole 515 may increase toward the outside of the battery module 1.

In some examples, the vent part 500 may include the vent hole 515 in the x-axis direction, which is the thickness direction of the housing 200, and the vent hole 515 may be defined by a diameter of the inner surface of the outer hopper 510 that increases toward the outside of the battery module 1.

Due to the vent hole 515, which has the diameter increasing toward the outside of the battery module 1, a flow rate at which venting gas and the like inside the battery module 1 diffuse to the outside of the battery module 1 may increase, thereby reducing the concentration of the flammable venting gas and suppressing oxygen outside the battery module 1 from flowing into the inside of the battery module 1.

This may reduce the possibility of flame generation and the size of flame generated due to the reaction of the venting gas and the like with oxygen inside and outside the battery module 1. This may also alleviate and suppress backflow of the venting gas and the like into the battery module 1.

Referring to FIGS. 6 and 7, the vent part 500 according to embodiments may include an outer hopper 510, an inner hopper 520, and a connecting portion 530 connecting the outer hopper 510 and the inner hopper 520.

The inner hopper 520 may include an opening 525 formed through the inner hopper 520 along the center of the vent hole 515, for example, in the x-axis direction that is the thickness direction of the inner hopper 520. The opening 525 may be defined by an inner surface of the inner hopper 520. A diameter of the opening 525 may increase toward the outside of the battery module 1.

The opening 525 may allow the vent part 500 to discharge venting gas and the like in two directions, that is, between the outer hopper 510 and the inner hopper 520 and through the opening 525, so that the venting gas and the like may diffuse quickly and disperse widely to the outside of the battery module 1. This may further reduce the concentration of venting gas and the like, and reduce the possibility of flame generation due to the reaction with oxygen and the size of the flame.

The connecting portion 530 may connect the outer hopper 510 and the inner hopper 520 so that the inner hopper 520 is supported by the outer hopper 510. To satisfy this, there may be at least three connecting portions 530. As an example, a distance between adjacent connecting portions 530 of the three connecting portions 530 may be the same.

The description of the vent part 400 with reference to FIGS. 4 and 5 may be applied to the vent part 500 according to this embodiment unless stated otherwise.

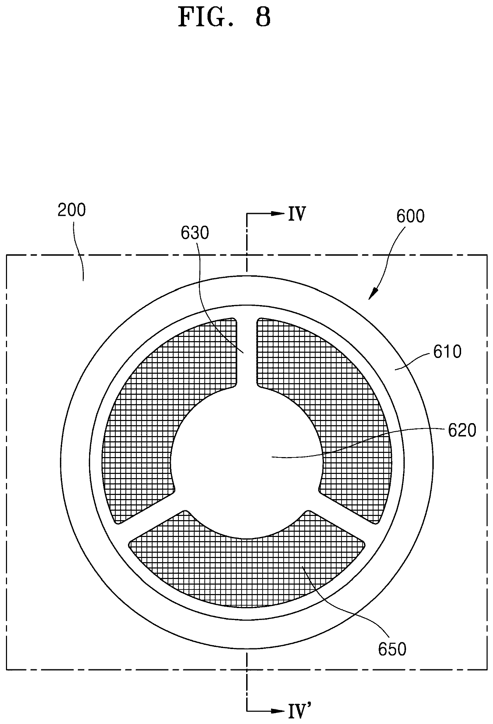

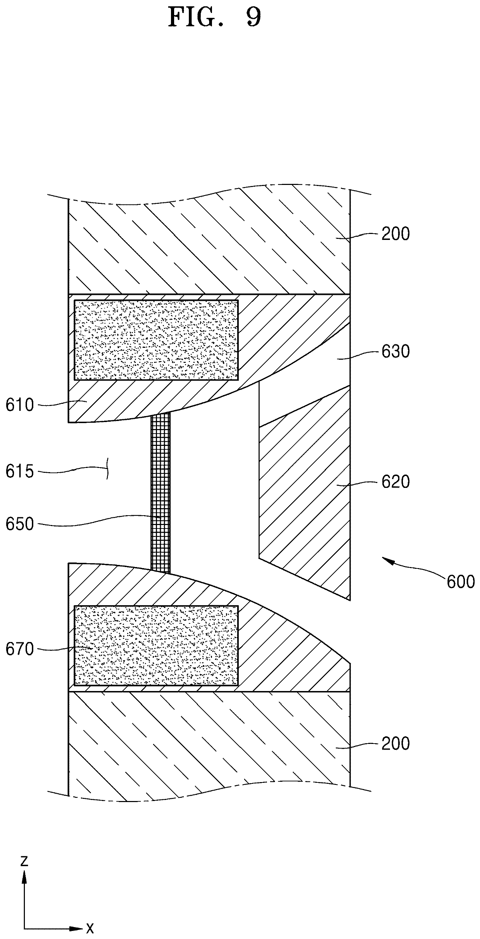

FIG. 8 is a schematic plan view of another embodiment of a vent part of FIG. 1, and FIG. 9 is a cross-sectional view taken along line IV-IV' of FIG. 8.

A vent part 600 may be arranged in one area of the housing 200 of the battery module 1. The vent part 600 may include an outer hopper 610 which is formed through a portion of the housing 200 and has an inner surface defining a vent hole 615. An outer surface of the outer hopper 610 may be in contact with the housing 200 to connect the housing 200 and the vent part 600. A diameter of the vent hole 615 may increase toward the outside of the battery module 1.

In some examples, the vent part 600 may include the vent hole 615 in the x-axis direction, which is the thickness direction of the housing 200, and the vent hole 615 may be defined by a diameter of the inner surface of the outer hopper 610 that increases toward the outside of the battery module 1.

Due to the vent hole 615, which has the diameter increasing toward the outside of the battery module 1, a flow rate at which venting gas and the like inside the battery module 1 diffuse to the outside of the battery module 1 may increase, thereby reducing the concentration of the flammable venting gas and suppressing oxygen outside the battery module 1 from flowing into the inside of the battery module 1.

This may reduce the possibility of flame generation due to reaction of the venting gas and the like with oxygen inside and outside the battery module 1 and the size of the flame. This may also alleviate and suppress backflow of the venting gas and the like into the battery module 1.

Referring to FIGS. 8 and 9, the vent part 600 according to embodiments may include an outer hopper 610, an inner hopper 620, a connecting portion 630 connecting the outer hopper 610 and the inner hopper 620, and a mesh portion 650 blocking the vent hole 615.

The mesh portion 650 may be connected to the outer hopper 610 and may be arranged in a z-axis direction, which is perpendicular to an extension direction of the vent hole 615, so as to block the vent hole 615.

The mesh portion 650 may be a structure formed by regularly crossing a number of lines, and may have a mesh structure by connecting knots (crossings) and edges (lines). The mesh of the mesh portion 650 may have various patterns, for example, square or hexagonal patterns. However, the mesh portion 650 is not limited to this and may have a shape including a plurality of holes.

The mesh portion 650 in the mesh shape having small holes may suppress fire spreading by blocking leakage of high-temperature fragments, which may act as flame and ignition sources, to the outside of the battery module 1, and suppress accumulation of pressure or heat in the battery module 1 by allowing heat and venting gas to pass therethrough.

Venting gas and the like may be discharged to the outside of the battery module 1 through the vent hole 615 via the holes defined by the lines of the mesh portion 650. In case that the mesh portion 650 has fine lines, for example, a small mesh size, flames and fragments heading to the outside of the battery module 1 may be blocked.

In case that the holes of the mesh portion 650 are smaller, it may be more difficult to discharge venting gas, such as carbon monoxide and hydrogen, which may cause a fire upon encountering oxygen outside the battery module 1.

In case that the holes of the mesh portion 650 are too small, ventilation may be inadequate, potentially causing pressure or heat to accumulate inside the battery module 1. As another example, in case that the holes of the mesh portion 650 are too large, flames, fragments, and flammable venting gas may be discharged directly outside the battery module 1, resulting in a larger fire.

The mesh size of the mesh portion 650 may be adjusted depending on the type, composition, and concentration of the flammable venting gas. The mesh size of the mesh portion 650 may be, for example, in a range of 1 mm to 10 mm, and preferably, in a range of 2 mm to 5 mm.

The mesh portion 650 may include a material having high heat resistance, fire resistance, and deformation resistance, and may include, for example, a metal or ceramic material.

The mesh portion 650 may be spaced apart from the inner hopper 620 located in the center of the outer hopper 610 and may be positioned farther from the outside of the battery module 1 than the inner hopper 620. Fragments and non-flammable venting gas whose temperatures have been lowered while passing through the mesh portion 650 may be discharged to the outside of the battery module 1 via the vent hole 615. This may reduce the risk of a larger fire outside the battery module 1.

The description of the vent parts 400 and 500 with reference to FIGS. 4 to 7 may be applied to the vent part 600 according to this embodiment unless stated otherwise.

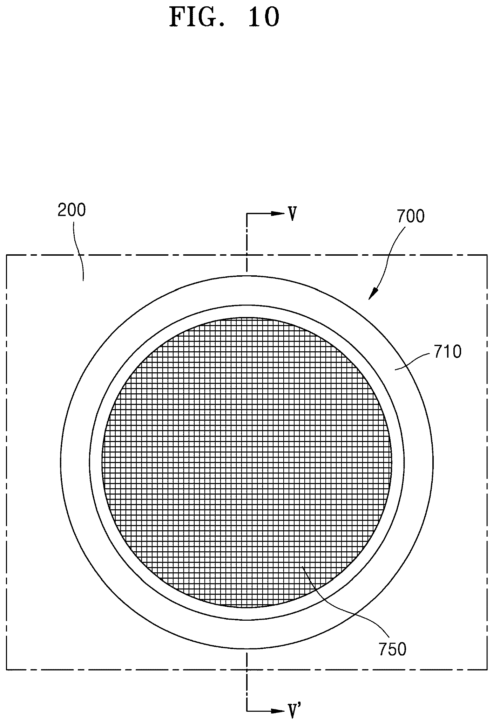

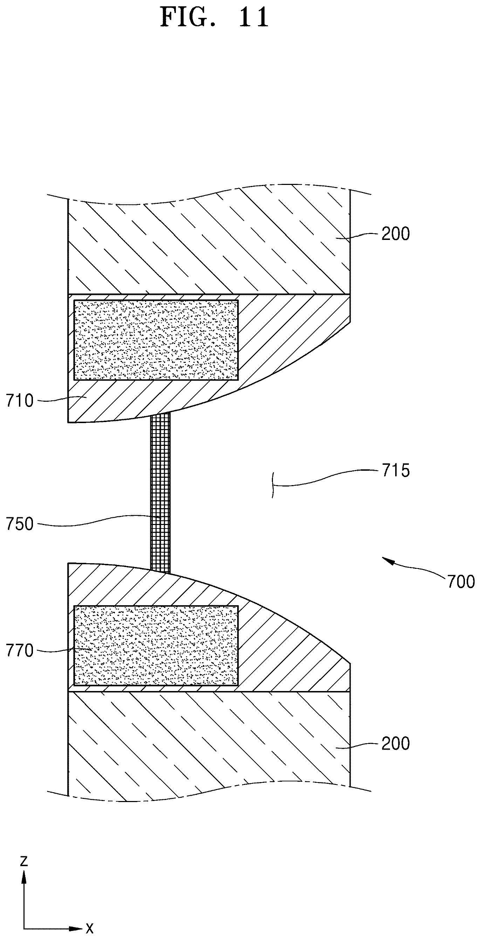

FIG. 10 is a schematic plan view of another embodiment of a vent part of FIG. 1, and FIG. 11 is a cross-sectional view taken along line V-V' of FIG. 10.

A vent part 700 may be arranged in one area of the housing 200 of the battery module 1. The vent part 700 may include an outer hopper 710 arranged through the housing 200.

An outer surface of the outer hopper 710 may be in contact with the housing 200 to connect the housing 200 and the vent part 700. An inner surface of the outer hopper 710 may define a vent hole 715 penetrating the housing 200, and a diameter of the vent hole 715 may increase toward the outside of the battery module 1.

In some examples, the vent part 700 may include the vent hole 715 in the x-axis direction, which is the thickness direction of the housing 200, and the vent hole 715 may be defined by a diameter of the inner surface of the outer hopper 710 that increases toward the outside of the battery module 1.

Due to the vent hole 715, which has the diameter increasing toward the outside of the battery module 1, a flow rate at which venting gas and the like inside the battery module 1 diffuse to the outside of the battery module 1 may increase, thereby reducing the concentration of flammable venting gas and suppressing oxygen outside the battery module 1 from flowing into the inside of the battery module 1.

This may reduce the possibility of flame generation due to reaction of the venting gas and the like with oxygen inside and outside the battery module 1 and the size of flame. This may also alleviate and suppress backflow of the venting gas and the like into the battery module 1.

Referring to FIGS. 10 and 11, a vent part 700 according to embodiments may include an outer hopper 710, a mesh portion 750, and a cooling portion 770.

Due to high-temperature and high-pressure inside the battery module 1, the mesh portion 750 may be deformed and fragments may be generated due to the deformation of the mesh portion 750. These high-temperature fragments may be discharged to the outside of the battery module 1 and may act as an ignition source.

The cooling portion 770 may be formed to surround the vent hole 715 in the outer hopper 710, and as an example, may be formed to surround the mesh portion 750.

Cooling water inside the cooling portion 770 may absorb heat from the fragments and venting gas, which pass through the vent hole 715, as well as heat from the mesh portion 750 itself. This may suppress the fragments due to the mesh portion 750 from acting as an ignition source outside the battery module 1.

The description of the vent parts 400, 500, and 600 with reference to FIGS. 4 to 9 may be applied to the vent part 700 according to this embodiment unless stated otherwise.

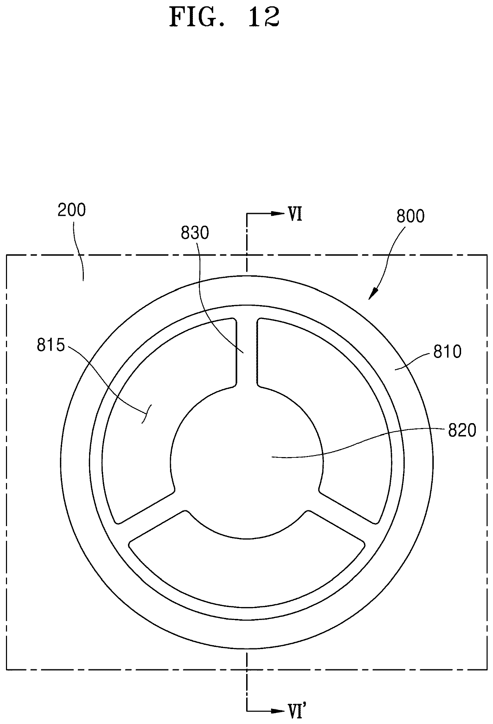

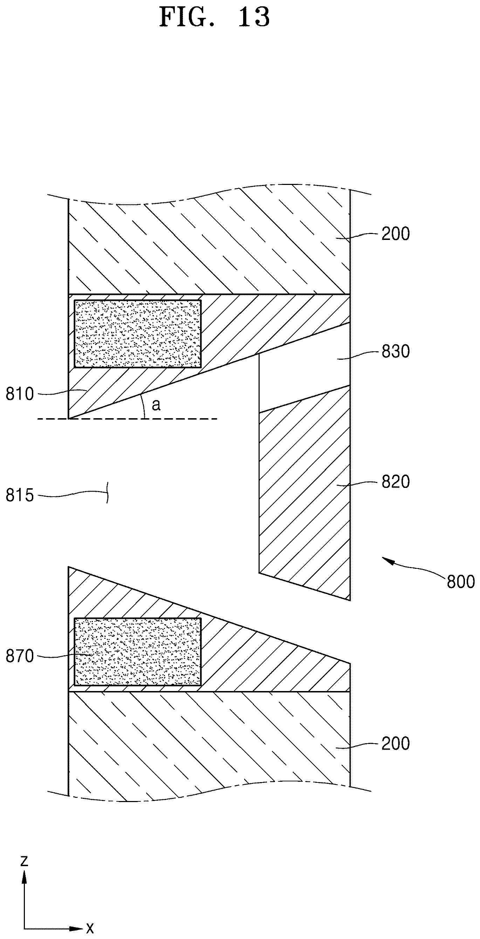

FIG. 12 is a schematic plan view of another embodiment of a vent part of FIG. 1, and FIG. 13 is a cross-sectional view taken along line VI-VI' of FIG. 12.

A vent part 800 may be arranged in one area of the housing 200 of the battery module 1. The vent part 800 may include an outer hopper 810 having an inner surface defining a vent hole 815, which penetrates a portion of the housing 200. An outer surface of the outer hopper 810 may be in contact with the housing 200 to connect the housing 200 and the vent part 800. A diameter of the vent hole 815 may increase toward the outside of the battery module 1.

In some examples, the vent part 800 may include the vent hole 815 in the x-axis direction, which is the thickness direction of the housing 200, and the vent hole 815 may be defined by a diameter of the inner surface of the outer hopper 810 that increases toward the outside of the battery module 1.

Due to the vent hole 815, which has the diameter increasing toward the outside of the battery module 1, a flow rate at which venting gas and the like inside the battery module 1 diffuse to the outside of the battery module 1 may increase, thereby reducing the concentration of flammable venting gas and suppressing oxygen outside the battery module 1 from flowing into the inside of the battery module 1.

This may reduce the possibility of flame generation due to reaction of the venting gas and the like with oxygen inside and outside the battery module 1 and the size of flame. This may also alleviate and suppress backflow of the venting gas and the like into the battery module 1.

Referring to FIGS. 12 and 13, the vent part 800 according to embodiments may include an outer hopper 810, an inner hopper 820, and a connecting portion 830 connecting the outer hopper 810 and the inner hopper 820.

An inner surface of the outer hopper 810 and an outer surface and/or inner surface of the inner hopper 820 are illustrated as having curves in FIGS. 5, 7, 9, and 11, but are not limited thereto, and may be formed to have straight lines, as shown in FIG. 13, instead of the curves.

Regardless of the curves or straight lines of the inner surface of the outer hopper 810 and the outer surface and/or inner surface of the inner hopper 820, the diffusion property may be improved by optimizing an angle at which the venting gas and the like are discharged to the outside of the battery module 1, and the concentration of the venting gas may be reduced.

An angle a, which is formed by a straight line connecting a point in contact with the outside of the battery module 1 and a point in contact with the inside of the battery module 1 on the inner surface of the outer hopper 810 and a line connecting the center of the vent hole 815, may be an angle at which at least venting gas discharged disperses and diffuses outside the battery module 1 and flames emitted are not in contact with the battery module 1.

In some examples, the angle a may be a slope of a straight line that connects opposite ends of the outer hopper 810 along the thickness direction of the housing 200. The angle a may be, for example, in a range of 30° to 60°.

The description of the vent parts 400, 500, 600, and 700 with reference to FIGS. 4 to 11 may be applied to the vent part 800 according to this embodiment unless stated otherwise.

The foregoing description only covers the battery module 1, but the disclosure may also be applied to a battery pack. A battery pack may include a plurality of battery cells 100 themselves or may include a plurality of battery modules 1. The vent part 400 described herein may be equally applied to the battery pack, for example, to a housing of the battery pack. Therefore, a battery pack with improved fire extinguishing capabilities may be disclosed.

According to one or more embodiments, a battery module including a vent part in which a vent hole widens toward the outside of the battery module may offer enhanced fire extinguishing capabilities.

However, the effects obtainable through the disclosure are not limited to the effects described herein, and other technical effects not mentioned will be clearly understood by those skilled in the art from the following description of the disclosure.

While the disclosure has been herein described with regard to a limited number of embodiments and drawings, the disclosure is not limited thereto and it is obvious to those skilled in the art that various modifications and changes may be made thereto within the technical aspects of the disclosure and the scope of the appended claims.

## Claims

1. A battery module (1) comprising:
a plurality of battery cells (100);
a housing (200) accommodating the plurality of battery cells; and
a vent part (400, 500, 600, 700, 800) arranged in a portion of the housing,
wherein:
the vent part (400, 500, 600, 700, 800) comprises an outer hopper (410, 510, 610, 710, 810) arranged through the housing (200),
an inner surface of the outer hopper (410, 510, 610, 710, 810) defines a vent hole (415, 515, 615, 715, 815) penetrating the housing (200), and
a diameter of the vent hole (415, 515, 615, 715, 815) increases toward outside of the battery module.

2. The battery module of claim 1, wherein:
the vent part (400, 500, 600, 800) further comprises an inner hopper (420, 520, 620, 820) located in a center of the outer hopper, and a connecting portion (430, 530, 630, 830) connecting the inner hopper (420, 520, 620, 820) and the outer hopper (410, 510, 610, 810) to one another.

3. The battery module of claim 2, wherein a distance between the outer hopper (410, 510, 610, 810) and the inner hopper (420, 520, 620, 820) increases toward the outside of the battery module.

4. The battery module of claim 2 or claim 3, wherein a thickness of the inner hopper (420, 520, 620, 820), measured in a direction from inside to outside of the housing (200), is smaller than a thickness of the outer hopper (410, 510, 610, 810).

5. The battery module of claim 4, wherein the inner hopper (520) comprises an opening (525) formed through the inner hopper in a thickness direction of the inner hopper.

6. The battery module of claim 5, wherein a diameter of the opening (525) increases toward the outside of the battery module.

7. The battery module of any one of claims 1 to 6, wherein the vent part (600) comprises a mesh portion (650) arranged in a direction substantially perpendicular to an extension direction of the vent hole (615) to block the vent hole.

8. The battery module of claim 7, wherein the mesh portion (650) has a mesh size in a range of 1 mm to 10 mm.

9. The battery module of claim 7 or claim 8, wherein:
the vent part (600) further comprises an inner hopper located in a center of the outer hopper, and
the inner hopper (620) is spaced apart from the mesh portion (650) and is positioned closer to the outside of the battery module than the mesh portion.

10. The battery module of any one of claims 1 to 9, wherein the outer hopper (410, 710) further comprises a cooling portion (470, 770) surrounding the vent hole (415, 715).

11. The battery module of any one of claims 1 to 10, wherein a slope of a straight line connecting opposite ends of the outer hopper (820) in a thickness direction of the housing is in a range of 30° to 60°.
